# EUROPEAN PATENT APPLICATION

(11) **EP 2 955 053 A1**
(43) Date of publication of application: **16.12.2015**
(21) Application number: 15167805.9
(22) Date of filing: 15.05.2015
(51) Int. Cl.: B60L 11/14, B60L 15/20, B60W 10/08, H02P 27/08, H02P 21/02

(54) **ROTARY ELECTRICAL MACHINE CONTROL DEVICE**

(30) Priority: 21.05.2014 JP 2014105609
(71) Applicant: JTEKT CORPORATION, Osaka-shi Osaka 542-8502 (JP)
(72) Inventor: Yanagi, Takuya, Osaka-shi,, Osaka 542-8502 (JP); Iwai, Yuta, Osaka-shi,, Osaka 542-8502 (JP)
(74) Representative: TBK

(57) **Abstract**

A vehicle control device 10 of a rotary electrical machine control device includes an application voltage generation unit that generates a voltage control signal S_b that is used to apply a power supply voltage V1 to a DC/DC converter 24 at a voltage equal to or higher than the power supply voltage V1 or at a voltage lower than the power supply voltage V1; and a voltage command value generation unit that generates a motor control signal S_a that controls a drive motor 11. The voltage command value generation unit performs computation based on overmodulation PWM control as PWM control in the case where the application voltage that is lower than the power supply voltage V1 is applied so as to output the motor control signal S_a having a pulse width longer than a cycle of a PWM carrier.

## Description

### BACKGROUND OF THE INVENTION

### 1. Field of the Invention

The invention relates to a rotary electrical machine control device.

### 2. Description of Related Art

A rotary electrical machine control device described in Japanese Patent Application Publication No. 2009-225634 (JP 2009-225634 A), for example, is conventionally known for a rotary electrical machine control device that controls a drive circuit for driving a rotary electrical machine, such as a motor, by use of electricity supplied from a power supply such as a battery. In such rotary electrical machine control device, a voltage of the electricity supplied from the battery is boosted through a boost converter and supplied to an inverter to allow an output from a motor equal to or larger than a battery voltage. The content of PWM control in the inverter is changed in accordance with the voltage for controlling the drive of the motor to enhance the efficiency in controlling the drive of the motor.

In the technique described in JP 2009-225634 A, according to a voltage setting map defining boosting/non-boosting of the voltage to be supplied to the inverter, an extent to which a voltage is boosted in the boosting, and the like, a voltage that is equal to or higher than the battery voltage is essentially supplied to the inverter. If the output from the motor needs to be always equal to or larger than the battery voltage, it is effective to define a voltage as indicated in the voltage setting map. However, in situations where the output from the motor smaller than the battery voltage is sufficient, the voltage to be supplied to the inverter is unnecessarily high, and this may impair the efficiency of the inverter.

### SUMMARY OF THE INVENTION

It is an object of the present invention to provide a rotary electrical machine control device that enhances the efficiency of a drive circuit.

According to an aspect of the present invention, a rotary electrical machine control device includes: a signal control unit; a drive circuit that supplies a drive power to a rotary electrical machine based on a control signal output by the signal control unit; and a voltage control unit that controls a power supply voltage of a DC power supply so that the power supply voltage is equal to or higher than the power supply voltage or to lower than the power supply voltage, and applies the resultant voltage to the drive circuit. The signal control unit generates the control signal by comparing a voltage command value computed based on PWM control and a PWM carrier, by use of an application voltage applied by the voltage control unit, and performs computation based on overmodulation PWM control as PWM control in the case where the voltage control unit applies the application voltage that is lower than the power supply voltage so as to output the control signal having a pulse width longer than a cycle of the PWM carrier.

According to the configuration, in a situation where the output of the rotary electrical machine that is lower than the power supply voltage is sufficient, the application voltage that is lower than the power supply voltage can be used, so that the application voltage to be applied to the drive circuit can be suppressed from becoming unnecessarily high. Accordingly, in a situation where the application voltage that is lower than the power supply voltage is used, it is possible to reduce a loss based on on/off switching of the pulse.

Furthermore, when the application voltage that is lower than the power supply voltage is used, the computation is performed based on the overmodulation PWM control as the PWM control so as to output the control signal having a pulse width longer than the cycle of the PWM carrier. This increases the amplitude of the output voltage as compared to the case where the computation is performed based on normal PWM control, or so-called sine wave PWM control. Thus, when the application voltage that is lower than the power supply voltage is used, the application voltage to be applied to the drive circuit can be further suppressed to a low voltage, and the number of times of on/off switching of the pulse can be reduced as compared to the case where the computation is performed based on the normal PWM control. Therefore, the loss based on the on/off switching of the pulse can be further reduced and the efficiency of the drive circuit can be enhanced.

In the rotary electrical machine control device according to the aspect, the signal control unit may switch, as the PWM control in the case where the voltage control unit applies an application voltage that is equal to or higher than the power supply voltage, control including normal PWM control and the overmodulation PWM control according to an output and a rotation speed of the rotary electrical machine.

According to the configuration, in a situation where the application voltage that is equal to or higher than the power supply voltage is applied, the content of the PWM control can be switched according to the output and the rotation speed of the rotary electrical machine. Thus, the efficiency of the drive circuit can be enhanced in accordance with the output and the rotation speed properties in scenes where the rotary electrical machine is used.

For example, in the situation where the application voltage that is equal to or higher than the power supply voltage is applied, the computation is performed based on the normal PWM control when the rotation speed of the rotary electrical machine is relatively low, and the computation is performed based on the overmodulation PWM control when the rotation speed of the rotary electrical machine is relatively high. The proportion of performing the computation based on the overmodulation PWM control may be increased as the output of the rotary electrical machine reduces when the rotation speed of the rotary electrical machine is relatively high. According to this example, in the situation where the application voltage that is equal to or higher than the power supply voltage is applied, the computation is performed based on the normal PWM control when the rotation speed of the rotary electrical machine is low so that the drive of the rotary electrical machine can be finely controlled and the necessary output is effectively obtained. In the situation where the application voltage that is equal to or higher than the power supply voltage is applied, the computation is performed based on the overmodulation PWM control when the rotation speed of the rotary electrical machine is increased to a certain extent so that the drive of the rotary electrical machine is roughly controlled and the application voltage to supply to the drive circuit is suppressed to a low voltage. Therefore, the efficiency of the drive circuit in the situation where the computation is performed based on the PWM control with the application voltage that is equal to or higher than the power supply voltage can be enhanced.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view of a vehicle;
FIG. 2 is a block diagram showing an overview of a vehicle control device;
FIG. 3 is a block diagram showing a configuration of a microprocessor;
FIG. 4 is a view showing a control region map;
FIG. 5 is a view illustrating an operation of a switch;
FIG. 6A is a view illustrating normal PWM control; and
FIG. 6B is a view illustrating overmodulation PWM control.

### DETAILED DESCRIPTION OF EMBODIMENTS

Hereinafter, one embodiment of a rotary electrical machine control device will be described.

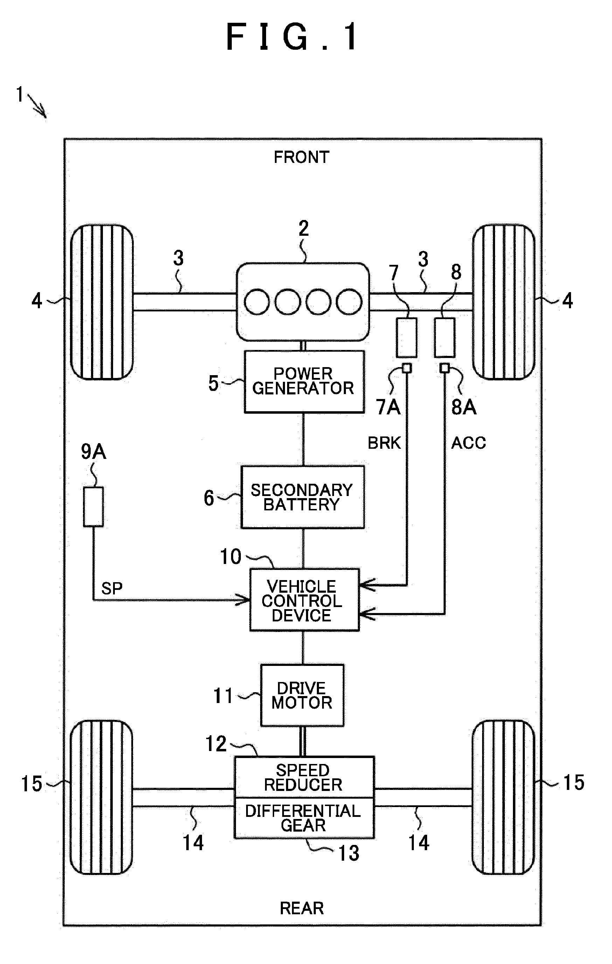

As shown in FIG. 1, a vehicle 1 includes an internal combustion engine 2 that is a main drive source of the vehicle 1. Drive shafts 3 are mechanically coupled to the internal combustion engine 2 to transmit power of the internal combustion engine 2, and a pair of right and left front wheels 4 on the front side of the vehicle is coupled to the internal combustion engine 2 via the drive shafts 3.

A power generator (three-phase brushless motor in the present embodiment) 5 that rotates using power of the internal combustion engine 2 to generate electricity is mechanically coupled to the internal combustion engine 2. A secondary battery 6 that is constituted of a lithium ion battery, for example, is electrically connected to the power generator 5 as a power supply to be charged with the generated electricity of the power generator 5. A vehicle control device 10 serving as a rotary electrical machine control device that operates using electricity from the secondary battery 6 is electrically connected to the secondary battery 6, and a drive motor (three-phase brushless motor in the present embodiment) 11, which is a sub-drive source of the vehicle 1, is also electrically connected to the secondary battery 6 via the vehicle control device 10.

Various sensors that detect the travel state of the vehicle 1 or the like including a brake sensor 7A, an accelerator sensor 8A, and a vehicle speed sensor 9A are electrically connected to the vehicle control device 10. The brake sensor 7A is a sensor that detects a brake operation amount BRK of a brake pedal 7, the accelerator sensor 8A is a sensor that detects an accelerator operation amount ACC of an accelerator pedal 8, and the vehicle speed sensor 9A is a sensor that detects a vehicle speed SP of the vehicle 1.

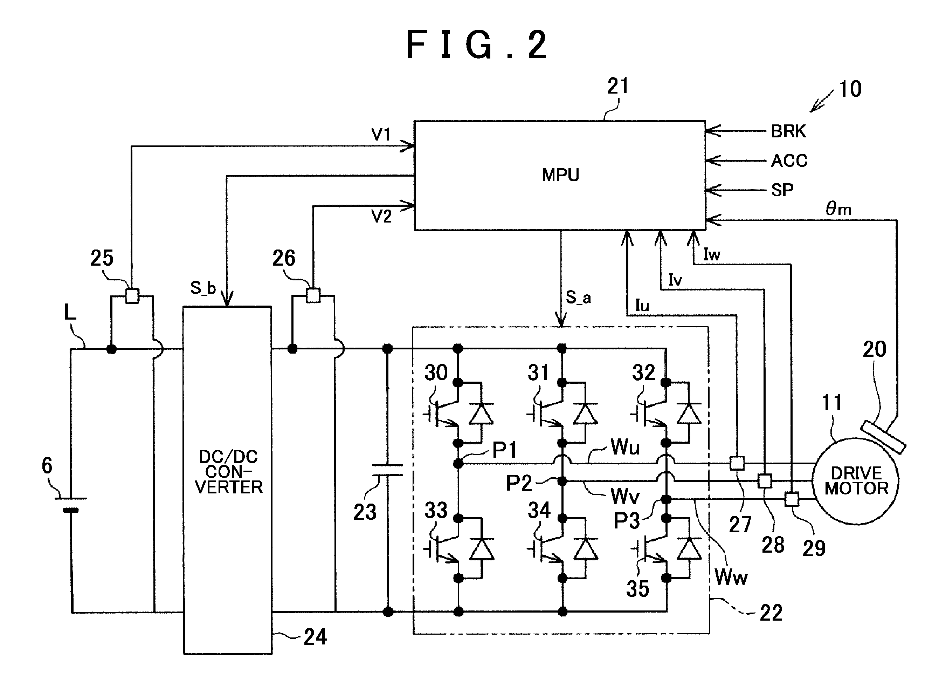

As shown in FIG. 2, the vehicle control device 10 grasps the travel state of the vehicle 1 based on detection signals from the sensors, and controls various in-vehicle devices in accordance with the grasped travel state. In the present embodiment, the drive of the drive motor 11 (device that generates a driving force of the vehicle 1) illustrated as the in-vehicle device is controlled.

A speed reducer 12 and a differential gear 13 that adjust the power of the drive motor 11 and transmit the power to drive shafts 14 are coupled to the drive motor 11, and a pair of right and left rear wheels 15 on the rear side of the vehicle are coupled to the drive motor 11 via the speed reducer 12, the differential gear 13, and furthermore, the drive shafts 14.

The vehicle 1 is a so-called front-engine-front-drive (FF) automobile in which a driving force of the vehicle 1 is generated by providing power of the internal combustion engine 2 mounted on the front side of the vehicle 1 to the front wheels 4. The vehicle 1 is a so-called hybrid automobile in which the power generator 5 generates electricity using the power of the internal combustion engine 2 to charge the secondary battery 6 and electric power is supplied from the secondary battery 6 to the drive motor 11 to generate the driving force of the vehicle 1 (rear wheels 15 in the present embodiment).

The driving force of the vehicle 1 is generated by transmitting the power of the drive motor 11 as torque that rotates the drive shafts 14 to the rear wheels 15 (load).

An electrical configuration of the vehicle control device 10 will now be described.

As shown in FIG. 2, the vehicle control device 10 includes a microprocessor (hereinafter referred to as MPU) 21 that outputs a motor control signal S_a (S_a1 to S_a6). The vehicle control device 10 includes a drive circuit 22 that supplies a drive power to the drive motor 11 based on the motor control signal S_a output from the MPU 21.

Switching elements (IGBTs in the present embodiment) classified as a pair of transistors connected in series are the fundamental unit. The drive circuit 22 includes a well-known inverter circuit formed by connecting the switching elements in parallel. Specifically, the drive circuit 22 is formed by connecting in parallel each of a series circuit of an upper switch 30 and a lower switch 33, a series circuit of an upper switch 31 and a lower switch 34, and a series circuit of an upper switch 32 and a lower switch 35 with a motor coil of a corresponding one of the phases. Each of a contact point P1 of the upper switch 30 and the lower switch 33, a contact point P2 of the upper switch 31 and the lower switch 34, and a contact point P3 of the upper switch 32 and the lower switch 35 is connected to the motor coil of a corresponding one of the phases (U-phase, V-phase, W-phase) of the drive motor 11 via feeders Wu, Wv, and Ww. The motor control signal S_a determines an on/off state of each switch 30 to 35. Each switch 30 to 35 is turned on/off in response to the motor control signal S_a, and a current-flowing pattern to the motor coil of the phases is switched by the opening/closing of each switch 30 to 35, so that the drive power of the three phases (U-phase, V-phase, W-phase) are output to the drive motor 11.

The drive circuit 22 is connected to the secondary battery 6 through a feeder L. The drive circuit 22 converts a direct current (DC) power of the secondary battery 6 to an alternating current (AC) power by turning the switches 30 to 35 on/off, and supplies the drive power of the three phases to the drive motor 11.

A smoothing capacitor 23 that smooths the current flowing to the feeder L is connected between the drive circuit 22 and the secondary battery 6 on the feeder L, and a DC/DC converter 24 serving as a voltage control unit is connected to a portion of the feeder L so as to be closer to the secondary battery 6 than the smoothing capacitor 23. The DC/DC converter 24 boosts a voltage (hereinafter referred to as power supply voltage V1) based on the DC power of the secondary battery 6 to equal to or higher than the power supply voltage V1 or decreases such voltage to lower than the power supply voltage V1, and supplies the resultant voltage to the drive circuit 22. There are cases where the DC/DC converter 24 boosts a voltage (hereinafter referred to as application voltage V2) of the current to be supplied to the drive circuit 22 so that the voltage is equal to or higher than the power supply voltage V1, and cases where the DC/DC converter 24 does not boost the voltage (non-boosting) so that the power supply voltage V1 is directly applied. There are also cases where the DC/DC converter 24 decreases the voltage so that the application voltage V2 to lower than the power supply voltage V1.

A first voltage sensor 25 that detects the power supply voltage V1 is provided between the DC/DC converter 24 and the secondary battery 6. A second voltage sensor 26 that detects the application voltage V2 is provided between the DC/DC converter 24 and the drive circuit 22. The voltage sensors 25, 26 are connected to the MPU 21. The voltages V1, V2 detected by the respective voltage sensors 25, 26 are received by the MPU 21.

The MPU 21 outputs a voltage control signal S_b to the DC/DC converter 24. The voltage control signal S_b determines an application voltage, and determines whether to boost, not to boost, or to decrease the power supply voltage V1 to be the application voltage V2. The DC/DC converter 24 controls the power supply voltage V1 so that the power supply voltage V1 becomes a predetermined application voltage V2 in response to the voltage control signal S_b.

Current sensors 27, 28, 29 that detect respective currents Iu, Iv, Iw flowing to the motor coils of the phases are provided between the drive circuit 22 and the drive motor 11. The current sensors 27 to 29 are connected to the MPU 21. The currents Iu to Iw detected by the respective sensors 27 to 29 are received by the MPU 21.

The drive motor 11 includes a rotation angle sensor 20 that detects a motor rotation angle θm of an output shaft 11a (not shown) of the motor. The rotation angle sensor 20 is connected to the MPU 21. The motor rotation angle θm detected by the rotation angle sensor 20 is received by the MPU 21.

The brake sensor 7A is connected to the MPU 21. The brake operation amount BRK detected by the brake sensor 7A is received by the MPU 21. The accelerator sensor 8A is connected to the MPU 21. The accelerator operation amount ACC detected by the accelerator sensor 8A is received by the MPU 21. The vehicle speed sensor 9A is connected to the MPU 21. The vehicle speed SP detected by the vehicle speed sensor 9A is received by the MPU 21.

The MPU 21 controls the DC/DC converter 24 based on the various pieces of information input from the various sensors to control the application voltage, and controls the drive motor 11 through the drive circuit 22.

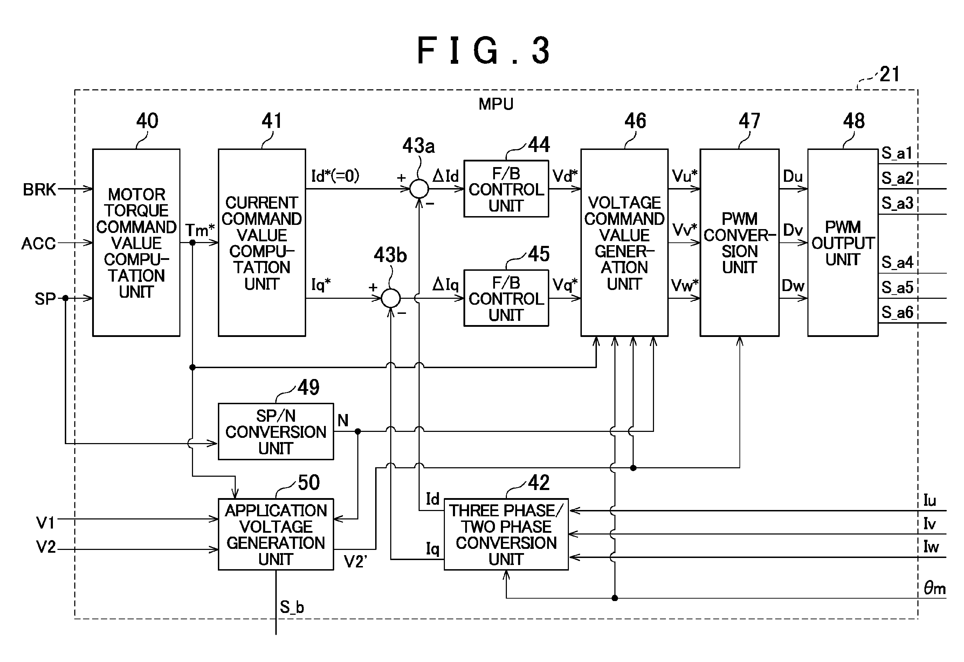

The control process of the drive motor 11 through the drive circuit 22 based on a command of the MPU 21 will now be described. As shown in FIG. 3, the MPU 21 includes a motor torque command value computation unit 40, a current command value computation unit 41, a three phase/two phase conversion unit 42, an SP/N conversion unit 49, and an application voltage generation unit 50. The motor torque command value computation unit 40 computes a motor torque command value Tm* of torque to be generated by the drive motor 11 based on the brake operation amount BRK, the accelerator operation amount ACC, and the vehicle speed SP. The motor torque command value computation unit 40 sets, for example, the motor torque command value Tm* to a larger value as the accelerator operation amount ACC or the vehicle speed SP increases.

The current command value computation unit 41 computes a q-axis current command value Iq* based on the motor torque command value Tm*. The current command value computation unit 41, for example, sets the q-axis current command value Iq* to a larger value as the absolute value of the motor torque command value Tm* increases. The current command value computation unit 41 outputs the computed q-axis current command value Iq* to a subtractor 43b. A d-axis current command value Id* is set to zero in the present embodiment, and the current command value computation unit 41 outputs the d-axis current command value Id* to a subtractor 43a. The d-axis current command value Id* and the q-axis current command value Iq* correspond to target values of the supply current of the drive motor 11 in a d/q coordinate system.

The three phase/two phase conversion unit 42 maps the currents Iu, Iv, Iw of the phases on the d/q coordinate system using the motor rotation angle θm to compute a d-axis current value Id and a q-axis current value Iq. The d-axis current value Id and the q-axis current value Iq are an actual current value of the drive motor 11 in the d/q coordinate system. The three phase/two phase conversion unit 42 outputs the computed d-axis current value Id and the q-axis current value Iq to the subtractors 43a, 43b, respectively.

The subtractor 43a subtracts the d-axis current value Id from the d-axis current command value Id* to obtain a d-axis current deviation ΔId, and outputs the obtained d-axis current deviation ΔId to a feedback control unit 44. The feedback control unit 44 executes current feedback control based on the d-axis current deviation ΔId so that the d-axis current value Id follows the d-axis current command value Id* to generate a d-axis voltage command value Vd*, and outputs the generated d-axis voltage command value Vd* to a voltage command value generation unit 46. The subtractor 43b subtracts the q-axis current value Iq from the q-axis current command value Iq* to obtain a q-axis current deviation ΔIq, and outputs the obtained q-axis current deviation ΔIq to a feedback control unit 45. The feedback control unit 45 executes current feedback control based on the q-axis current deviation ΔIq so that the q-axis current value Iq follows the q-axis current command value Iq* to generate a q-axis voltage command value Vq*, and outputs the generated q-axis voltage command value Vq* to the voltage command value generation unit 46.

The SP/N conversion unit 49 computes the rotation speed of the drive shafts 14 coupled to the rear wheels 15 using the vehicle speed SP. The SP/N conversion unit 49 computes a motor rotation speed N using the rotation speed of the drive shafts 14 and a speed reduction ratio of the speed reducer 12, and outputs the computed motor rotation speed N to the voltage command value generation unit 46.

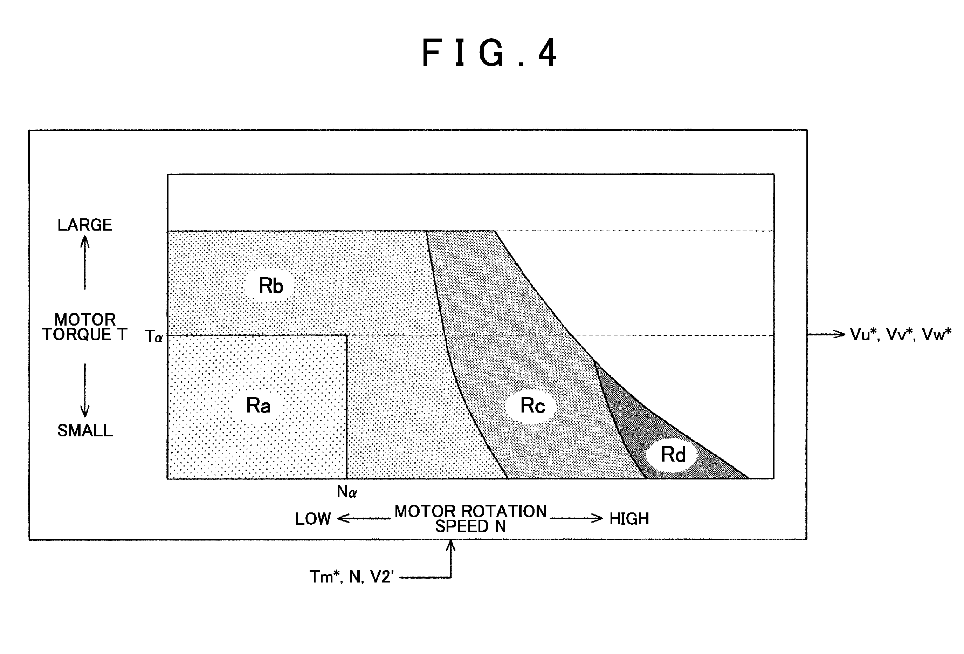

The application voltage generation unit 50 uses the motor torque command value Tm* and the motor rotation speed N, as well as the power supply voltage V1 and the application voltage V2 to generate the voltage control signal S_b, as shown in a control region map of FIG. 4, and outputs an application voltage V2' controlled by the voltage control signal S_b to the voltage command value generation unit 46 and a PWM output unit 48. In the present embodiment, the MPU 21 including the application voltage generation unit 50 configures the voltage control unit.

The voltage command value generation unit 46 maps the d-axis voltage command value Vd* and the q-axis voltage command value Vq* to a three phase coordinate system using the motor rotation angle θm to compute voltage command values Vu*, Vv*, and Vw* in the three phase coordinate system, and outputs the computed voltage command values Vu*, Vv*, and Vw* of the phases to the PWM conversion unit 47. The voltage command value generation unit 46 uses the motor torque command value Tm* and the motor rotation speed N to compute the voltage command values Vu*, Vv*, and Vw* based on predetermined PWM control, as shown in the control region map of FIG. 4. Each of the voltage command values Vu*, Vv*, and Vw* is computed taking also the application voltage V2' into consideration.

The voltage command value generation unit 46 computes the voltage command values Vu*, Vv*, and Vw* using one of normal PWM control (sine wave PWM control), overmodulation PWM control, or rectangular wave PWM control, which are all well-known PWM control as the predetermined PWM control. Specifically, the voltage command value generation unit 46 computes the sine wave voltage command values Vu*, Vv*, and Vw* having an amplitude that is equal to or smaller than the amplitude of the application voltage V2', that is, equal to or smaller than an amplitude of a PWM carrier to be compared later, based on the normal PWM control. The voltage command value generation unit 46 computes the sine wave voltage command values Vu*, Vv*, and Vw* having a modulated amplitude that is larger than the amplitude of the application voltage V2', that is, larger than the amplitude of the PWM carrier to be compared later, based on the overmodulation PWM control. The voltage command value generation unit 46 computes the sine wave voltage command values Vu*, Vv*, and Vw* having a modulated amplitude that is larger than the amplitude in the case of the overmodulation PWM control, based on the rectangular wave PWM control.

The PWM conversion unit 47 generates duty command values Du. Dv, Dw of the phases corresponding to the respective voltage command values Vu*, Vv*, Vw* of phases, and outputs the generated duty command values Du, Dv, Dw to the PWM output unit 48. The PWM output unit 48 generates motor control signals S_a1 to S_a6 as a PWM signal, by use of the application voltage V2', based on the comparison of the duty command values Du, Dv, Dw and the PWM carrier having the amplitude of the application voltage V2'. The PWM carrier of the present embodiment is a triangular wave, a saw-tooth wave, and the like serving as a carrier wave of the PWM signal related to the PWM control.

Specifically, when the voltage command value generation unit 46 computes the voltage command values based on the normal PWM control, the PWM output unit 48 generates the motor control signal S_a having a pulse width shorter than the cycle of the PWM carrier. When the voltage command value generation unit 46 computes the voltage command values based on the overmodulation PWM control, the PWM output unit 48 generates the motor control signal S_a having a pulse width longer than the cycle of the PWM carrier. When the voltage command value generation unit 46 computes the voltage command values based on the rectangular wave PWM control, the PWM output unit 48 generates the motor control signal S_a having the pulse width longer than the cycle of the PWM carrier. In the present embodiment, the MPU 21 including the voltage command value generation unit 46, the PWM conversion unit 47, and the PWM output unit 48 configures a signal control unit.

The control region map will now be described in detail.

As shown in FIG. 4, the control region map is divided into four control regions based on motor torque T (motor torque command value Tm*) and the motor rotation speed N. Specifically, the control regions include a region Ra (regular travel region) indicating the travel state of the vehicle 1 defined as a normal travel state in which the motor torque T is smaller than a threshold value Tα and the motor rotation speed N is smaller than a threshold value Nα. The normal travel state is, for example, defined with reference to a legal speed in a high standard road excluding an automobile expressway for each country. In the present embodiment, such a normal travel state is defined as a state in which the travelling of the vehicle 1 is not affected when the drive motor 11 is driven at the application voltage V2 that is lower than the power supply voltage VI. As an example of the state, the travel state in the "JC08 mode" defined by the government institution in Japan as a standard of the fuel consumption measurement method is assumed in the present embodiment.

The region Ra is a voltage decreasing region where the application voltage V2 is decreased below the power supply voltage V1, and is the control region where computation is performed based on the overmodulation PWM control as the PWM control. The threshold value Tα and the threshold value Nα are set to experimentally derived values on the assumption that the vehicle 1 is travelling in the JC08 mode, that is, the normal travel state.

The control regions include a region Rb indicating a middle-low speed travel state in which the motor torque T is equal to or larger than the threshold value Tα, and the motor rotation speed N is equal to and higher than the threshold value Nα but is relatively low, that is, the motor torque T and the motor rotation speed N are increased from the normal travel state. The region Rb is a non-boosting region where the application voltage V2 is set to the equivalent of the power supply voltage V1 without boosting, and is the control region where computation is performed based on the normal PWM control as the PWM control.

The control regions include a region Rc indicating a middle speed travel state in which the motor rotation speed N is equal to or higher than the threshold value Nα and is relatively high, that is, the motor rotation speed N is increased from the middle-low speed travel state. The region Rc is a boosting region where the application voltage V2 is boosted to the power supply voltage V1 or higher, and is the control region where computation is performed based on the overmodulation PWM control as the PWM control.

The control region includes a region Rd indicating a high speed travel state in which the motor rotation speed N is very high, that is, the motor rotation speed N is increased from the middle speed travel state. The region Rd is a boosting region where the application voltage V2 is boosted to the power supply voltage V1 or higher, and is the control region where computation is performed based on the rectangular wave PWM control as the PWM control.

In a situation of applying the application voltage V2 that is lower than the power supply voltage V1, the computation is performed based on the overmodulation PWM control. In a situation of applying the application voltage V2 that is equal to or higher than the power supply voltage V1, the computation is performed based on the normal PWM control if the motor rotation speed N is relatively low, and the computation is performed based on the overmodulation PWM control or the rectangular wave PWM control if the motor rotation speed N is relatively high. In a situation of applying the application voltage V2 that is equal to or higher than the power supply voltage V1, the proportion of performing the computation based on the overmodulation PWM control or the rectangular wave PWM control increases as the motor torque T decreases if the motor rotation speed N is relatively high. The computation based on the rectangular wave PWM control is associated with a situation in which the motor rotation speed N is remarkably high even among the situations where the motor rotation speed N is relatively high.

The vehicle control device 10 described above has the following operations and effects described in (1) to (3) below.
(1) As shown in the control region map of FIG. 4, the region Ra is assumed for the situation in which the travelling of the vehicle 1 is not affected at the application voltage V2 that is lower than the power supply voltage V1, which is defined as the normal travel state. When the computation based on the PWM control is performed, the application voltage V2 that is lower than the power supply voltage V1 can be used in the situation of the normal travel state where the output of the drive motor 11 that is lower than the power supply voltage V1 is sufficient, so that the application voltage V2 to be applied to the drive circuit 22 is suppressed from becoming unnecessarily high.

The following differences arise between the case where the application voltage V2 that is lower than the power supply voltage V1 is used and the case where the application voltage V2 that is equal to or higher than the power supply voltage V1 is used.

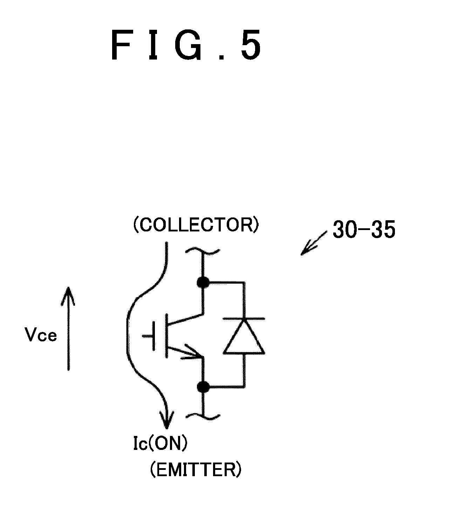

As shown in FIG. 5, the collector current Ic flows according to the change in a voltage Vce between the collector and the emitter, and accordingly, switches 30 to 35 turn on/off. While the switches 30 to 35 are turned off, the collector current Ic flowing from the collector toward the emitter increases as the voltage Vce between the collector and the emitter decreases, and consequently, the switches 30 to 35 are turned on. While the switches 30 to 35 are turned on, the current Ic flowing from the collector toward the emitter decreases as the voltage Vce between the collector and the emitter increases, and consequently, the switches 30 to 35 are turned off.

If an actual operation is assumed, a predetermined time is required until the voltage Vce and the collector current Ic finish changing when the switches 30 to 35 are to be turned on/off. When the switches are to be turned on/off, a power loss occurs that cause the switches to have neither function of on or off, or a so-called switching loss based on the on/off switching of the pulse of the voltage Vce and the collector current Ic of the switches 30 to 35 occurs for the predetermined time until the voltage Vce and the collector current Ic finish changing.

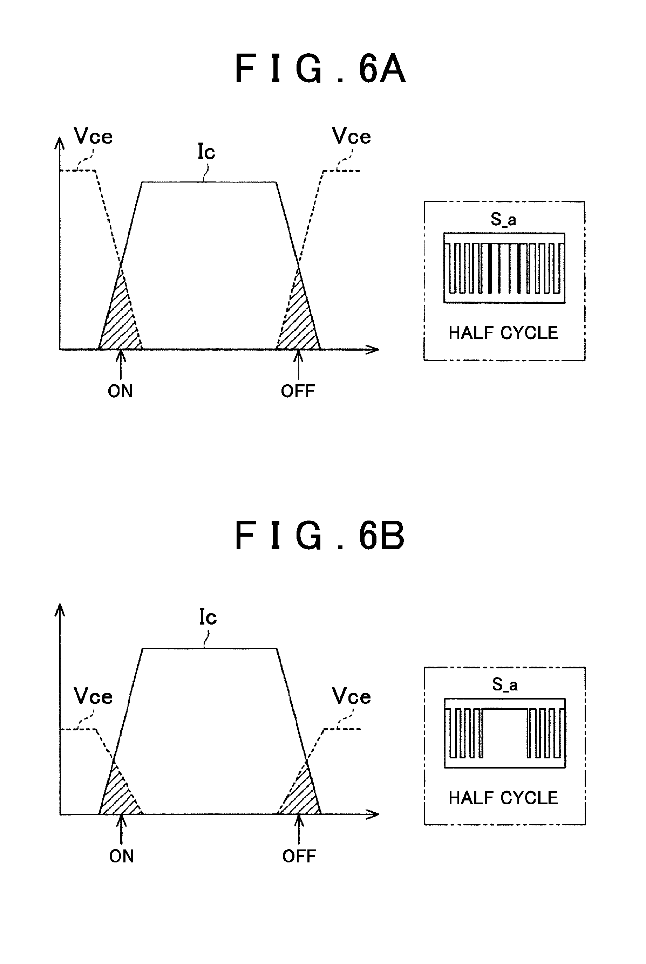

As shown with diagonal lines in FIGS. 6A and 6B, the switching loss can be schematically shown as an area where the voltage Vce and the collector current Ic are not zero and overlap until the voltage Vce and the collector current Ic finish changing when the switches are to be turned on/off. Between the high and low of the application voltage V2 to the drive circuit 22, that is, the voltage Vce, the area where the voltage Vce and the collector current Ic are not zero and overlap is smaller in the case where the voltage Vce is low (FIG. 6B) than the case where the voltage Vce is high (FIG. 6A). Therefore, in the control region map, the switching loss can be reduced in the situation of the region Ra, which is a voltage decreasing region.

Furthermore, in the region Ra, which is a voltage decreasing region, the computation is performed based on the overmodulation PWM control as the PWM control so as to output the motor control signal S_a having a pulse width longer than the cycle of the PWM carrier. This increases the amplitude of the output voltage as compared to the case where the computation is performed based on the normal PWM control.

As surrounded with a long dashed double-short dashed line on the right side of FIGS. 6A and 6B, the motor control signal S_a having a relatively short pulse width is generated by the computation based on the normal PWM control, whereas the motor control signal S_a having a relatively long pulse width is generated by the computation based on the overmodulation PWM control. In particular, in the computation based on the overmodulation PWM control, the voltage command values Vu*, Vv*, Vw* have the amplitude that is equal to or larger than the amplitude of the PWM carrier, that is, the application voltage V2, which is equivalent to increasing the maximum voltage that can be used as the output voltage (AC voltage) to drive the drive motor 11 to equal to or higher than the application voltage V2. For example, if the application voltage V2 is 136V and the maximum output voltage is increased to 1.1 times by the overmodulation PWM control, this is equivalent to increasing the application voltage to 150V at the maximum. Thus, when the application voltage V2 that is lower than the power supply voltage V1 is used, the application voltage V2 to be supplied to the drive circuit 22 can be further suppressed to a low voltage as compared to the case where the computation is performed based on the normal PWM control.

As shown in FIGS. 6A and 6B, when the computation is performed based on the overmodulation PWM control, the application voltage V2, that is, the voltage Vce is low, and the area where the voltage Vce and the collector current Ic are zero and overlap is reduced as compared to the case where the computation is performed based on the normal PWM control.

In the motor control signal S_a computed based on the overmodulation PWM control, the number of times of on/off switching of the pulse is fewer than that in the motor control signal S_a computed based on the normal PWM control, even if the comparison is made for a half cycle of the signal. In other words, the sum of the areas, where the voltage Vce and the collector current Tc are not zero and overlap, reduces even if the comparison is made a half cycle of the signal. Therefore, in the control region map, the switching loss can be further reduced in the situation of the region Ra, which is the voltage reducing region. Such enhancement in the efficiency of the drive circuit 22 also contributes to the reduction of pulsation of the drive motor 11, that is, the enhancement in the efficiency of the drive motor 11.

(2) As shown in the control region map of FIG. 4, the regions Rb to Rd are assumed for the situation where the application voltage V2 that is equal to or higher than the power supply voltage V1 is applied. In the regions Rb to Rd, the content of the PWM control is switched in accordance with the motor torque T and the motor rotation speed N of the drive motor 11.

According to the present embodiment, in the situation where the application voltage V2 that is equal to or higher than the power supply voltage V1 is applied, the computation is performed based on the normal PWM control if the motor rotation speed N is low so that the drive of the drive motor 11 is finely controlled and the necessary output (motor torque T) is effectively obtained. In the situation where the application voltage V2 that is equal to or higher than the power supply voltage V1 is applied, the computation is performed based on the overmodulation PWM control or the rectangular wave PWM control if the motor rotation speed N is increased to a certain extent so that the drive of the drive motor 11 is roughly controlled and the application voltage V2 to the drive circuit 22 is suppressed to a low voltage. Thus, in the situation where the motor rotation speed N is increased to a certain extent, in particular, the reduction of the switching loss described above can be realized. Therefore, it is possible to enhance the efficiency of the drive circuit 22 in the situation where the application voltage V2 that is equal to or higher than the power supply voltage V1 is applied.

(3) In the present embodiment, a situation corresponding to the normal travel state in which the motor torque T and the motor rotation speed N are defined based on the travel state of the vehicle 1 is defined as the situation where the application voltage V2 that is lower than the power supply voltage V1 is applied. In other words, the situation where the application voltage V2 that is lower than the power supply voltage V1 applied is narrowed to a state where the travelling of the vehicle 1 is not affected when the drive motor 11 is driven at the application voltage V2 that is lower than the power supply voltage V1 from the beginning as in the normal travel state. This can further enhance the effect of the control.

The embodiment described above may be appropriately modified and implemented in the following modes.
- As an example of the state where the travelling of the vehicle 1 is not affected when the drive motor 11 is driven at the application voltage V2 that is lower than the power supply voltage V1, a travel state in 10 mode and 10-15 mode, which are standards of the fuel consumption measurement method other than JC08 mode, may be assumed.
- The situation where the application voltage V2 that is lower than the power supply voltage V1 is applied may be changed by changing the threshold value Tα or the threshold value Nα according to the specifications of the vehicle, and the like. Furthermore, the situation where the application voltage V2 that is lower than the power supply voltage V1 is applied may be defined based on either the motor torque T or the motor rotation speed N, and for example, may be a situation in which the motor rotation speed N is smaller than the threshold value Nα irrespective of the motor torque T.
- Division of the control region map may be changed, and for example, a region Rb' where computation is performed based on the overmodulation PWM control may be defined in the region Rb, which is the non-boosting region, or a region Rc' where computation is performed based on the normal PWM control may be defined in the region Rc, which is the boosting region. These regions Rb', Rc' can be defined so that the efficiency of the drive circuit 22 is enhanced based on the application voltage V2. A region where computation is performed based on the overmodulation PWM control may not be provided other than the region Ra depending on the specifications of the vehicle, and the like.
- The computation based on the PWM control may be reflected on the duty command values Du, Dv, Dw when the command values are generated in the PWM conversion unit 47. In this case, the duty command values Du, Dv, Dw correspond to the voltage command values.
- In the computation based on the overmodulation PWM control, a method of modulating the amplitude of the PWM carrier is also considered. In this case, the computation based on the PWM control may be reflected on the motor control signal S_a when the signal is generated in the PWM output unit 48.
- Each switch 30 to 35 merely needs to be capable of being electrically turned on/off, and may be changed to a switching element such as an FET.
- The vehicle 1 may be a hybrid automobile of a different drive system, or a so-called electric automobile. In addition, the vehicle 1 may be a fuel cell automobile that uses a fuel cell for the power supply.
- In the embodiment described above, an application example to the vehicle control device that controls the drive of the drive motor 11 that generates the driving force of the vehicle has been described, but the present invention may be applied to a motor control device that controls the drive of the motor that generates an assist force in an electric power steering device.

A vehicle control device 10 of a rotary electrical machine control device includes an application voltage generation unit that generates a voltage control signal S_b that is used to apply a power supply voltage V1 to a DC/DC converter 24 at a voltage equal to or higher than the power supply voltage V1 or at a voltage lower than the power supply voltage V1; and a voltage command value generation unit that generates a motor control signal S_a that controls a drive motor 11. The voltage command value generation unit performs computation based on overmodulation PWM control as PWM control in the case where the application voltage that is lower than the power supply voltage V1 is applied so as to output the motor control signal S_a having a pulse width longer than a cycle of a PWM carrier.

## Claims

1. A rotary electrical machine control device comprising:
a signal control unit;
a drive circuit that supplies a drive power to a rotary electrical machine based on a control signal output by the signal control unit; and
a voltage control unit that controls a power supply voltage of a DC power supply so that the power supply voltage is equal to or higher than the power supply voltage or lower than the power supply voltage, and applies the resultant voltage to the drive circuit; wherein
the signal control unit generates the control signal by comparing a voltage command value computed based on PWM control and a PWM carrier, by use of an application voltage applied by the voltage control unit, and performs based on overmodulation PWM control as PWM control in the case where the voltage control unit applies an application voltage that is lower than the power supply voltage so as to output the control signal having a pulse width longer than a cycle of the PWM carrier,.

2. The rotary electrical machine control device according to claim 1, wherein
the signal control unit switches, as the PWM control in the case where the voltage control unit applies an application voltage that is equal to or of higher than the power supply voltage, control including normal PWM control and the overmodulation PWM control according to an output and a rotation speed of the rotary electrical machine.

3. The rotary electrical machine control device according to claim 1 or 2, wherein
the voltage control unit applies the application voltage that is lower than the power supply voltage according to at least one of an output and a rotation speed of the rotary electrical machine.

4. The rotary electrical machine control device according to claim 3, wherein
the voltage control unit applies the application voltage that is lower than the power supply voltage according to the output and the rotation speed of the rotary electrical machine.

5. The rotary electrical machine control device according to claim 4, wherein
the voltage control unit applies the application voltage that is lower than the power supply voltage in a situation corresponding to a normal travel state in which the output and the rotation speed of the rotary electrical machine are defined based on a travel state of a vehicle.
